# EUROPEAN PATENT APPLICATION

(11) **EP 3 425 920 A1**
(43) Date of publication of application: **09.01.2019**
(21) Application number: 17180076.6
(22) Date of filing: 06.07.2017
(51) Int. Cl.: H04N 21/63, H04N 21/6405, H04N 21/2343, H04N 21/438, H04N 21/426

(54) **MEDIA RECEIVER FOR AVOIDING INTERRUPTION OF IMAGE DISPLAY UPON CHANNEL SWITCHING**

(71) Applicant: Vestel Elektronik Sanayi ve Ticaret A.S., 45030 Manisa (TR)
(72) Inventor: Kirisken, Barbaros, 45030 Manisa (TR); Yatir, Mustafa Nevzat, 45030 Manisa (TR)
(74) Representative: Hermann, Felix

(57) **Abstract**

This disclosure relates to a media receiver keeps and its operation. The media receiving receiver receives sample images of one or more media channels the viewer might tune to and, upon channel switching, the receiver causes display of a sequence of images of the media stream of the new channel buffered at the media receiver when the channel is switched from the current channel to one of the channels for which the receiver receives sample images. Upon the media stream decoder in the media receiver providing the first decoded media frames of the new channel, the receiver switches to causing display of the decoded media stream of the new channel. Using this method, the user experience can be improved, as there is hardly any delay between the channel switching command and the display of images of the new selected channel.

## Description

### TECHNICAL FIELD

This disclosure relates to improving switching between media channels in a media receiver (e.g. an ATSC or DVB receiver).

### TECHNCIAL BACKGROUND

Channel switching durations became critical problem with recent television (TV) receivers and digital broadcast. There are three critical factors increasing delays between channel switches in new generation receivers. These are (1) Linux operating system (or any other complex OS used) causes tuning delays, (2) digital signals are needed to collect some frames because of video compression algorithms (media codecs), and (3) use of silicon based tuners.

WO 2012/095427A1 suggests reducing tuning delays from compressing algorithms. The reference suggests using multilayer coding for switching between channels. At one or more enhancement layers are adapted for providing fast switching between data channels by providing it with more random access points, e.g. more IDR- frames, than the base layer.

US 6,118,498 A relates to an ATSC or DVB television receiver. In a channel scanning mode of operation, a plurality of identified program transport streams (i.e., media channels) are sequentially retrieved from one or more system streams. A portion of each retrieved program transport stream, such as an intra-frame encoded video frame within an included elementary video stream, is extracted and stored in a memory. In a channel changing mode of operation, if a desired channel is one of the sequentially scanned channels, then the stored I-frame is retrieved and coupled to a media stream decoder 202 while the desired channel is reacquired by tuning, demodulating, and demultiplexing operations. In this manner, the inherent latency of the tuning, demodulating, and demultiplexing operations are somewhat masked. Moreover, by storing tuning and demodulation parameters associated with an anticipated "next" channel, the actual time required to retrieve that channel is reduced.

However, requires the use of plural tuners and different program transport streams need to be decoded concurrently in order to allow for fast channel switching. Accordingly, the requirements on the performance of the hardware of the ATSC or DVB television receiver, and thus also costly. It would be desirable to enable fast channel switching also for less complex and more cost efficient media receivers, which may have only one channel tuner.

### SUMMARY

An aspect of this disclosure relates to enabling fast switching media channels at a media receiver. Advantageously, the viewer watching a TV program and switching to another channels should not experience any interruption in display during the time period in which the receiver switches to the new media channel and acquired the media channel by, for example, tuning, demodulating, demultiplexing and decoding operations.

In this aspect, the media receiver keeps receiving images (sample images) of one or more media channels the viewer might tune to (e.g. adjacent channels of the current channel, favorite channels of the user, etc.) and, upon channel switching, the receiver causes display of a sequence of images of the media stream of the new channel (e.g. a TV program) buffered at the receiver when the channel is switched from the current channel to one of the channels for which the receiver receives said images. Upon the media stream decoder in the receiver providing the first decoded media frames of the new channel, the receiver switches to causing display of the decoded media stream of the new channel. Using this method, the user experience can be improved, as there is hardly any delay between the channel switching command and the display of images of the media stream of the new selected channel and the receiver may provide a seamless switching to the decoded media stream of the new channel, once the media stream decoder starts providing decoded images of the new channel.

One embodiment relates to a method for switching media channels at a media receiver. The method comprises receiving an encoded media stream of a first media channels (out of a plurality of media channels the media receive is capable of receiving). The media receiver may be decoding the first media stream of a first media channel at the given time instance. Further, the receiver may also receive, from an sample image server, a sequence of sample images of media stream conveyed by the second media channel of the plurality of media channels. In response to switching from the first media channel to the second media channel, the receiver starts decoding the encoded media stream of said second media channel using a media stream decoder. During the time interval between said point in time of switching from the first media channel to the second media channel and the point in time of the first decoded image of the media stream of said second media channel becoming available, the receiver causes display of said sequence of sample images received from the sample image server; and upon the first decoded image of the media stream of said second media channel becoming available at the media stream decoder, the receiver causes the display of decoded images of the media stream of said second media channel (received from the receiver's media stream decoder).

In a further example embodiment, the images in said sequence of sample images of the media stream of said second media channel received from the sample image server via a packet switched network (e.g. Internet, a (wireless) local area network ((W)LAN) or mobile network (e.g. 3G or 4G network).

In an embodiment, the sample images may have a lower resolution than the (higher resolution) images of said second media channel decoded by the media receiver. For example, the images in said sequence of sample images of the media stream of said second media channel received from the sample image server each have a size smaller than 1 MByte, preferably less than kByte. The sample images may have a size of a few kBytes only, so as to allow their fast transmission/steaming to the receiver even at lower bandwidths of the packet switched network.

In another embodiment, the individual images in said sequence of sample images of the media stream of said second media channel are received in intervals from the sample image server. For example, the media streams server may provide a new (decoded) sample image of the second media channel to the receiver every few milliseconds (ms), e.g. every 2, 5, 10, 20, 50 or 100 ms (without limiting this disclosure to these examples). The frequency of sending the sample images may be in the range of 20 ms (inclusive) to 120 ms (inclusive). This may facilitate that the receiver can output the sample images for display sequentially in a video-like manner. Apparently, the lower the frequency of providing new sample images to the receiver, the lower the frame rate may be for display and the more recognizable the differences between the sample images may be to the viewer, but the less bandwidths is required. The interval may thus be adjusted to the available connection speed (e.g. bandwidth or data rate) of the receiver to the packet switched network connecting the receiver to the media server.

In one example implementation, the sample images of the media stream of said second media channel may be received by streaming the sequence of sample images of the media stream of said second media channel from the sample image server using a streaming protocol. Further and optionally, the individual images in said sequence of sample images of the media stream of said second media channel are received using the User Datagram Protocol (UDP) as a transport protocol, or via HTML5-based transport (e.g. using Hybrid Broadcast Broadband TV (HbbTV)).

As apparent from the above, the individual images in said sequence of sample images of the media stream of said second media channel that received from the sample image server correspond to images in said encoded media stream conveyed by the second media channel which may be broadcast to and received by the receiver substantially concurrently.

In an embodiment, the receiver may receive, from the sample image server and via the packet-based network, sequences of images of media streams of different media channels of said plurality of media channels the television broadcast signal. For example, the different media channels may include one or more of: one or more media channels adjacent to the first media channel in the media channel list, media channels of a favorite media channel list, and a media channel tuned to prior to the first media channel.

Further, in other embodiments, the receiver may receive the media streams via broadcast television signals. For example, the media server may receive ATSC or DVB broadcast signals. Alternatively or in addition, the receiver may receive (at least some of) the media streams via a packet-based network, e.g. from a streaming media server (e.g. in an IPTV system).

The above embodiments and aspect may also be implemented in software. For example, one embodiment provides one or more computer readable media storing instructions that, when executed by a processor of a media receiver, cause the media receiver to perform the method according to the embodiments discussed herein.

Another embodiment relates to a media receiver. The media receiver may be for example used in a (digital) television set or a set top box. The media receive comprises a tuner configured to tune to one of a plurality of media channels to receive a media stream conveyed by said one media channel. The tuner may also be configured to start providing, in response to switching from a first media channel of the plurality of media channels to a second media channel of the plurality of media channels, a media stream conveyed by the second media channel to a media stream decoder. The media receiver may also comprise a network interface (for example a network interface card or IC) configured to connect to a packet-based network for receiving, from an sample image server, a sequence of sample images of the media stream of the second media channel. The media stream decoder of the media receiver may start decoding the encoded media stream of said second media channel upon starting to receive the media stream of the second media channel from the tuner. The media receiver may also have a controller (which may be implemented by means of software/firmware executed in the media receiver by a processor) configured to output, during a time interval between a point in time of switching from the first media channel to the second media channel and a point in time of the first decoded image of the media stream of said second media channel becoming available at the media stream decoder, said sequence of sample images received from the sample image server for display on a screen; and to output, upon the first decoded image of the media stream of said second media channel becoming available at the media stream decoder, decoded images of the media stream of said second media channel for display on the screen.

In another embodiment, the media receiver may also comprise a sample image buffer for storing the sequence of sample images. The network interface may be configured to add new images of said sequence of images to the sample image buffer upon their reception from the sample image server.

In a further embodiment, the network interface may be configured to implement a streaming protocol stack for streaming the individual images in said sequence of sample images of the media stream of said second media channel are from the sample image server using a streaming protocol.

### BRIEF DESCRIPTION OF THE DRAWINGS

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices, circuits, and methods are omitted so as not to obscure the description of the present invention with unnecessary detail.
- **Fig. 1**: shows a flow chart of a channel switching process performed by a media receiver in accordance with an example embodiment;
- **Fig. 2**: shows an exemplary structure of a media receiver 200 in accordance with an example embodiment;
- **Fig. 3**: shows an exemplary system, including a set top box and a sample image server in accordance with an example embodiment;
- **Fig.4**: exemplifies the output of images for display by the media receiver when performing a channel switching process in accordance with the example embodiment in Fig. 1.

### DETAILED DESCRIPTION

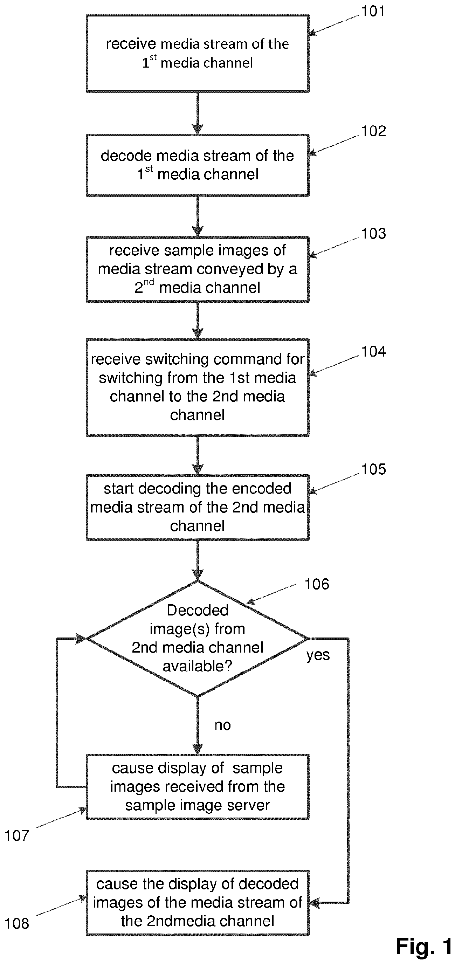

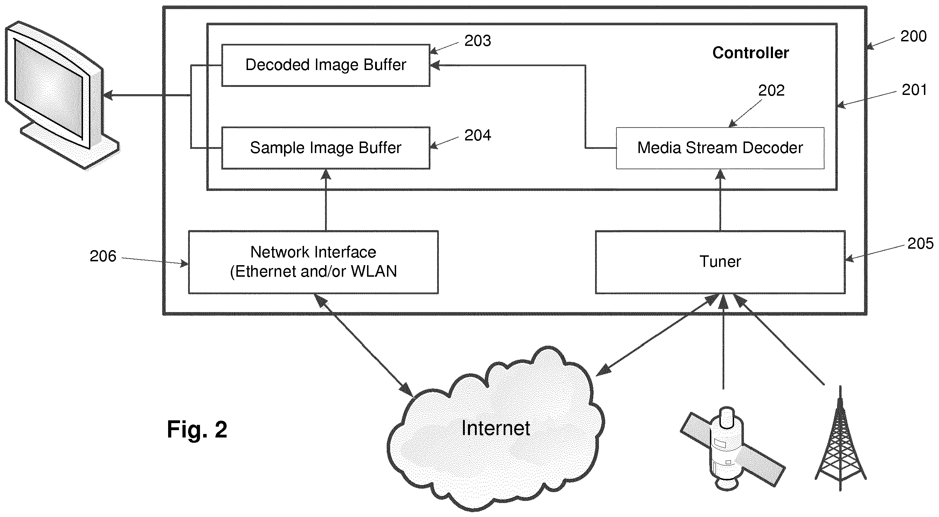

Fig. 2 shows an exemplary structure of a media receiver 200 in accordance with an example embodiment, which is capable of performing the process illustrated in Fig. 1 that will be described later herein below.. The media receiver 200 may be for example used in a (digital) television set or a set top box. Fig. 2 illustrates an example where the media receiver 200 is integrated into a set top box, which provides its output to a display.

The media receiver 200 comprises a controller 201, a network a tuner 205 and an interface 206. The controller 201 may comprise functional or physical sub-units. These functional or physical sub-units may include a media stream media stream decoder 202 202 (which may also be provided as an entity physically separated from the controller 201, e.g. in form a decider IC) and some memory providing a decoded image buffer 203 and some sample image buffer 204.

The controller 201 may be for example implemented by means of software/firmware executed in the media receiver 200 by a processor. Alternatively, the controller 201 may be implemented in hardware of by a combination of hardware and software/firmware, e.g. by means of a System on Chip (SoC). At least some of the functionality of the controller 201 (e.g. the decoder 202's functionality, or the sample image buffer 204 and/or decoded image buffer 203) might be implemented in a dedicated IC. The IC might be for example a memory chip, a processor, application specific integrated circuit (ASIC), programmable logic device (PLD), field programmable gate array (FPGA), etc.

The network interface 206 may support wireless and/or wired and/or optical connection(s) to the Internet. The network interface 206 may thus include one or more network interface cards or IC that allow the controller 201 to be communicatively coupled to the Internet via one or more communication standards. The communication standards supported by the network interface 206 may include one or more of Ethernet, WLAN (IEEE 802.11 family), 3^{rd} generation and/or 4^{th} generation 3GPP standards (e.g. UMTS, LTE, LTE-Advanced, LTE-Advanced Pro, etc.), etc. These examples of communication standards are not intended to be limiting. The network interface 206 may also implement the protocol staclc(s) necessary for communication according to one or more of the communication standards, at least from the physical layer to the transport layer of the OSI protocol stack. The session layer and higher of the OSI protocol stack may be implemented by the controller 201.

The media receiver 200 comprises tuner 205 which is capable of tuning to various media channels (e.g. digital TV channels) to receive a media stream conveyed by the respective media channel. As indicated in Fig. 2, the tuner 205 may receive its signals providing media streams of the different media channels from one or more of different sources. The sources include the Internet, in which case the network interface 206 receives the media streams and forwards them to the tuner 205.

The media streams may be provided via the Internet using for example an IPTV standards or another standard that allows receiving TV programs via a packet-based network. In addition or alternatively, the media channels may be streamed from some media server. Another source for receiving media streams may be conventional TV broadcast, which may include receiving TV channels via satellite, cable or antenna (or a combination thereof). The digital TV channels/media steams may be provided for example according to one more ATSC standards (e.g. ATSC 2.0, ATSC 3.0, ATSC.M/H, etc.) and/or DVB standards (e.g. DVB-T, DVB-T2, DVB-S, DVB-S2, DVB-S2C, DVB-C, DVB-C2, DVB-H, DVB-NGH, DVB-SH, etc.).

Generally, the media streams are provided to the tuner 205 in an encoded format. Example codecs for encoding the video of the media streams include AVS, HEVC, H.262/MPEG-2 Part 2, H.264/MPEG-4 AVC, etc. The audio of the media streams may be encoded using an audio codec including MP3, AC-3, E-AC-3, AAC, HE-AAC, etc. It should be noted that the tuner 205 may be capable of supporting different standards of the ATSC standards family and/or DVB standards family, and the media stream decoder 202 may likewise support the codecs for the respective supported standards.

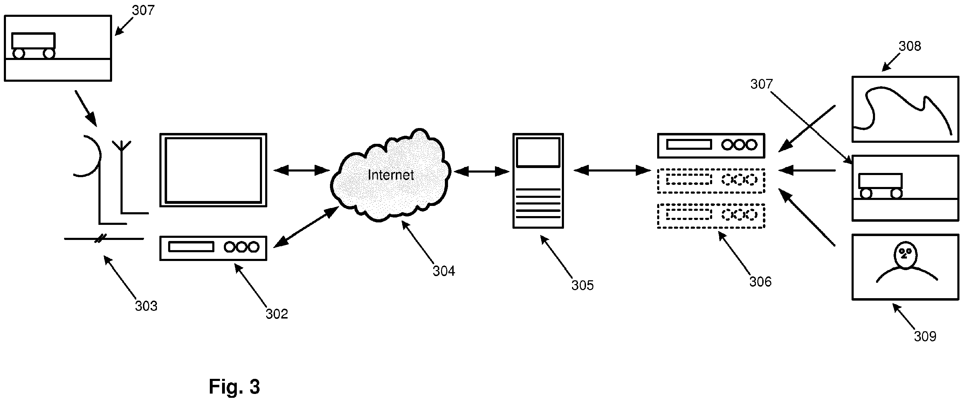

As will be outlined in further below, the network interface 206 may receive sample images of one or more media channels 307, 308, 309 from a sample image server 305 (see Fig. 3) via the Internet. The sample images are decoded frames (images) of media channels the tuner 205 is also capable of receiving. The sample images may be for example streamed from the sample image server 305 using some streaming protocol (e.g. using the Real-Time Protocol (RTP)-based streaming, or Hypertext Transfer Protocol (HTTP) -based streaming), but also a other/proprietary solutions based on HTML5-based or UDP-based transport could be used for transfer of the sample images. IP-broadcast or IP-multicast may also be foreseen instead of IP-unicast on the network layer, specifically, if the sample image server 305 is serving a plurality of media receivers. The transfer of the sample images is performed in parallel to the tuner 205's operation, i.e. in parallel to the tuned media channel being received by the tuner 205 and being decoded in the media stream decoder 205. The media receiver 200 may however receive sample images from channels the tuner 205 is currently not tuned to, but rather from one or more channels the user may possible switch to. These may include, for example, one or more of: one or more media channels adjacent to the first media channel in the media channel list of the media receiver 200, media channels of a favorite media channel list defined by a user/stored in the media receiver 200, and a media channel tuned to prior to the currently tuned media channel. The sample images are provided from the network interface 206 to the sample image buffer 204.

Decoded image buffer 203 and sample image buffer 204 may be realized by some memory, which temporarily buffers decoded and sample images, respectively. Both buffers 203, 204 may be realized in a FIFO-like manner, i.e. they may have a capacity of holding only a predetermined number of decoded images and sample images per channel, respectively. The stored images in the buffers 402, 403 is updated by replacing the oldest image stored by a new image arriving at the respective buffer. The sample image buffer 204 may be implemented in a FIFO-like manner for each buffered media channel for which sample images are received. It is assumed that in view of the - in comparison to the sampling frequency of the video in the encoded media stream - large time period between two successive sample images, reordering of the sample images on the data path through the packet-switched network may be ruled out for practical purposes, so that no image reordering logic may be implemented in the media receiver 200 and associated control overhead for signaling can be avoided.

The sample images of a given channel may also have a size significantly smaller than the corresponding frames would be obtained from decoding the corresponding frames of the given cannel. The sample images may also be intra-coded (e.g. using JPEG compression or the like), so that the media receiver 200 can output them for display individually, without requiring any image information in timely adjacent frames of the video. In an embodiment, the sample images may have a lower resolution than the (higher resolution) images of said second media channel decoded by the media receiver. For example, the images in said sequence of sample images of the media stream of the given media channel received from the sample image server 305 may each have a size smaller than 1 MByte, preferably less than 100 kByte. The sample images may have a size of a few kBytes only, so as to allow their fast transmission/steaming to the media receiver 200 even at a lower bandwidth via the packet switched network (Internet). As will be explained below, one or more media converters 306 (see Fig. 3), which may each have multiple tuners to receive and decode different channels at the same time, will decode the media streams of different media channels provide the decoded frames of the different channels to the sample image server 305. These different media channels include at least some of the media channels the tuner 205 is capable to receive. The sample image server 305 will convert the decoded frames (images) from the different channels in sample images of smaller size. Note that alternatively the conversion may also be realized in the one or more media converters 306, so that the sample image server 305 receives the already converted sample images.

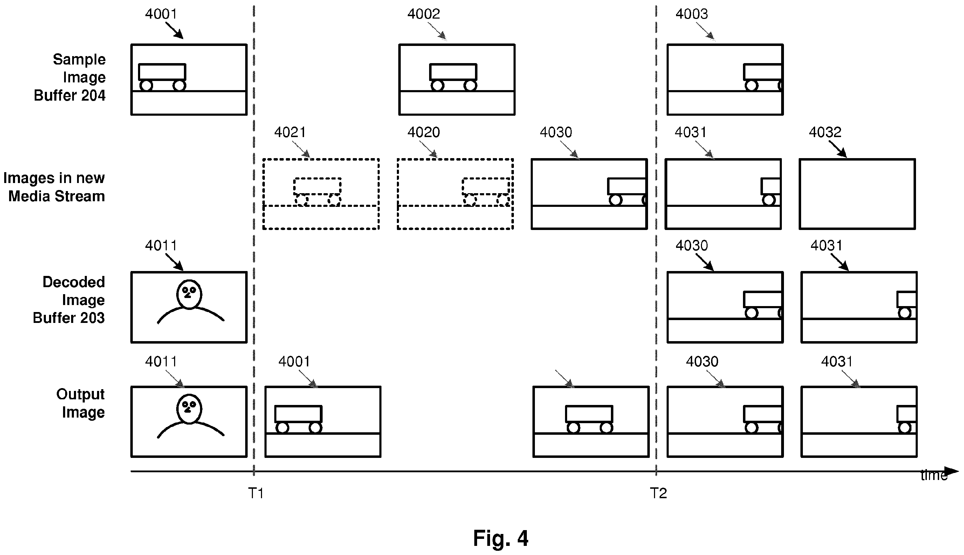

The individual sample images in the sequence of sample images of the one or more media channel may be received from the sample image server 305 in intervals. For example, the sample image server 305 may provide a new (decoded) sample image for a given media channel to the media receiver 200 every few milliseconds (ms), e.g. every 2, 5, 10, 20, 50 or 100 ms (without limiting this disclosure to these examples). This may facilitate that the media receiver 200 can output the sample images for display sequentially in a video-like manner as will be explained in connection with Fig. 4 below. It is apparent that the lower the frequency of providing new sample images to the receiver, the lower the frame rate may be for display and the more recognizable the differences between the sample images may be to the viewer, but the less bandwidths is required (at a substantially constant size of the sample images). The interval and/or sample image size may thus be (dynamically) adjusted by the sample image server 305 to the available connection speed (e.g. bandwidth or data rate) of the media receiver 200's connection to the Internet, respectively, the connection speed between the media receiver 200 and sample image server 305. The adjustment may be for example based on feedback provided by the media receiver 200.

Fig. 1 shows a flow chart of a channel switching process performed by a media receiver 200 in accordance with an example embodiment. For exemplary purposes, it may be assumed that the media receiver 200 (i.e. its tuner 205) is currently tuned to a 1^{st} channel by the user, and thus receives 101 the encoded media stream of the 1^{st} channel. The tuner 205 provides the media stream to the media stream decoder 202, which decodes 102 the media stream. The media stream decoder 202 may provide the decoded frames (images) of the video to the decoded image buffer 203 for buffering and output to the user. The time period between two subsequent frames being output by the media stream decoder 202 may be inverse to the sampling frequency of the original video, which is commonly about 30 Hz (30 images/second), or even 60 Hz. This is also highlighted in Fig. 4, where the row "Decoded Image Buffer 203" is intended to indicate decoded images over time available for output (in the proper sequence in time). The row "Images in new Media Stream" is intended to highlight that the encoded frame may be received by the tuner 205 at a timer earlier than they are put into the decoded image buffer 203, which is due to the decoding delay, which may vary between individual images, specifically, if inter-coded.

In parallel to receiving and decoding the media stream of the 1^{st} channel, the media receiver 200 also receives 103 sample images of another media stream belonging to another 2^{nd} channel. As will be outlined in more detail in connection with Fig. 4 below, the sample images may be decoded images of the 2^{nd} channel and are received from a sample image server 305 via the Internet (through the network interface 206). The sample images may be buffered in the sample image buffer 204 of the media receiver 200. This is also highlighted in Fig. 4, where the row "Sample Image Buffer 204" is intended to indicate sample images over time available for output (in the proper sequence in time). As indicated, the time period between receptions of two subsequent sample images (e.g. images 4001 and 4002, images 4002 and 4005) is (significantly) lower than the time period between receptions of two subsequent decoded images (e.g. decoded images 4030 and 4031).

At some point in time (also referred to a T1 below in connection with Fig. 4) the user switches from the currently tuned channel (1^{st} media channel in Fig. 1) to another channel (2^{nd} media channel in Fig. 1), e.g. by means of a remote control. The controller 201 receives 104 a corresponding switching command indicating the new channel to be tuned to. In Fig. 4 it is assumed for exemplary purposes that the last decoded image output from the decoded image buffer 203 before receiving the switching command is decoded image 4011. The controller 201 further causes the tuner 205 to tune to the new channel and start providing the encoded media stream of the new media channel to a media stream decoder 202. This is highlighted in the row "Images in new Media Stream" which are indicating the "occurrence" of individual encoded images in the media stream (in terms of their encoded data) in time.

Furthermore, the controller 201 may also reset the decoder 202 prior to the decoder 202 receiving the new media stream from the tuner 205. This reset may also involve flushing the decoded image buffer 203. The controller 201 also causes the decoder 205 to switch to decoding 105 the new media stream. As noted, when switching context in the decoder 202, the decoder 202 will require some time find a first intra-coded image in the new media stream it can use as a starting point for the decoding process of modern video codecs (which commonly use a mix of intra- and inter-coded frames). Also there may be additional delays due to complex OS and also it may take some time for the tuner 205 to switch to the new channel and provide the first transport frames (e.g. referred to as Network Abstraction Layer (NAL) units for the H.264/AVC and HEVC video codec) to the decoder 202 for decoding. Hence, there will be some (significant) time delay between the media receiver 200 receiving the channel switching command for tuning to a new channel and the media decoder 202 being able to provide the first decoded frame of the media stream of the new channel. This is highlighted also in Fig. 4, where images 4021 and 4020 may be inter-coded, but their base frame is missing, so that the media stream decoder 202 cannot decode these images. The first "decodable" may be the image 4030, followed by images 4031 and 4032.

As long as there the first decoded frame (see frame 4030 in Fig. 4) of the media stream of the new channel is not yet available (see block 106: no), the media controller 201 causes 107 the (latest) sample images in the sample image buffer 204 to be output for display (e.g. to the display device shown in Fig. 2) in a "video-like" fashion. The media controller 201 may update the sample image from the sample image buffer 204 output for display upon a new sample image being received and added to the sample image buffer 204. In Fig. 4, the controller 201 may for example output sample images 4001 and 4002. Once the first decoded frame of the media stream of the new channel becomes available in the decoded image buffer 203 (see block 106: yes), the media controller 201 starts outputting 108 the decoded frames provided by the media decoder 202 from the decoded image buffer 203 (instead of the sample images). In Fig. 4, the time point at which the first decoded frame of the media stream of the new channel becomes available in the decoded image buffer 203 is denoted "T2", and the controller 201 switches to outputting decoded images from the decoded image buffer 203 starting with the first decoded image 4030.

For switching output of images, the media decoder 202 may send a control signal to the controller 201 (i.e. some functionality thereof) to indicate when the first decoded frame 4030 has been stored in the decoded image buffer 203, and the control signal causes the media controller 201 to switch from outputting images from the sample image buffer 204 to outputting images from the decoded image buffer 203.

During the time interval (Δ*T* = *T*2 - *T*1) between said point in time T1 of switching from the media stream to the previously tuned media channel (1^{st} media channel) and the point in time T2 of the first decoded image 4030 of the media stream of the new media channel (2^{nd} media channel) becoming available, the media receiver 200 thus causes display of a sequence of sample images 4001, 4002 received from the sample image server 305, and upon the first decoded image 4030 of the media stream of said new media channel becoming available at the media stream decoder 202, the media receiver 200 causes the display of decoded images 4030, 4031, ... of the media stream of said new media channel (received from the receiver's media stream decoder 202).

Fig. 3 shows an exemplary system, including a set top box 302 and a sample image server 305 in accordance with an example embodiment. The set to box 302 may include a media receiver 200 as shown in Fig. 2. The system also comprised a display 301 (e.g. a television set), which is coupled to the set to box 302 for the display of images received from the set to box 302. The set to box 302 and display 301 may be for example connected by means of a HDMI cable or the like. As explained in connection with Fig. 2 above, the media receiver 200 could alternatively be implemented in the display 201 directly, in which case the images may be output to a driver of the display panel of the display 201 via an internal bus. The set to box 302 and optionally also the display 301 may be coupled via a network interface to the Internet 304. The media receiver 200 in the set to box 302 (or display 301) uses the connection to the Internet 304 to obtain sample images of one more media channels from sample image server 305 in the manner described herein above.

The sample image server 305 may be connected to one or more media converters 306. Each media converter 306 may have multiple tuners (similar to tuner 205 in function) to receive different media channels 307, 308, 309 at the same time. Each tuner of a media converter 306 may provide the encoded media stream to a respective decoder in the media converter 306. The decoder may be either a software decoder or hardware decoder IC implemented in the media converter 306. The decoders of the media converter 306 may support various different codecs, including for example AVS, HEVC, H.262/MPEG-2 Part 2, H.264/MPEG-4 AVC, etc. The audio of the media streams may be encoded using an audio codec including MP3, AC-3, E-AC-3, AAC, HE-AAC, etc. No audio decoder may be implemented in the one or more media converters. The decoder(s) in the one or more media converter 306 decode the media streams of the different channels 307, 308, 309 at the same time and provide the decoded frames of the different channels 307, 308, 309 to the sample image server 305. These different media channels 307, 308, 309 include at least some of the media channels the tuner 205 is capable to receive. For example, one may assume for exemplary purposes, that the media receiver 200 in the set top box 302 or display 301 is currently tuned to channel 308, which is also one of the channels to which the media converter 306 is tuned.

The sample image server 305 may comprise one or more encoders (e.g. transcoders) which convert(s) the decoded frames (images) from the different channels 307, 308, 309 in sample images for the given channel 307, 308, 309 of smaller size. Note that alternatively the conversion may also be realized in the one or more media converters 306, so that the sample image server 305 receives the already converted sample images for the channels 307, 308, 309. The media receiver 200 in the set top box 302 or display 301 sample image server 305 may receive sample images of channels 307 and 309 from the sample image server 305 in the manner described herein above, while being tuned to and decoding channel 308.

The above embodiments and aspect may also be implemented in software. For example, one embodiment provides one or more computer readable media storing instructions that, when executed by a processor of a media receiver, cause the media receiver 200 to perform the method according to the embodiments discussed herein (e.g. in connection with Fig. 1).

The foregoing description of one or more implementations provides illustration and description, but is not intended to be exhaustive or to limit the scope of the invention to the precise form disclosed. Modifications and variations are possible in light of the above teachings or may be acquired from practice of various implementations of the invention.

## Claims

1. A method for switching media channels at a media receiver, the method comprising:
decoding a media stream of a first media channel of a plurality of channels the media receiver is capable of receiving;
receiving, from an sample image server and via a packet-based network, a sequence of sample images of media stream conveyed by the second media channel of said plurality of media channels;
in response to switching from the first media channel to the second media channel, starting to decode the encoded media stream of said second media channel using a media stream decoder; and
during the time interval between said point in time of switching from the first media channel to the second media channel and the point in time of the first decoded image of the media stream of said second media channel becoming available, causing display of said sequence of sample images received from the sample image server; and
upon the first decoded image of the media stream of said second media channel becoming available at the media stream decoder, causing the display of decoded images of the media stream of said second media channel.

2. The method of claim 1, wherein the images in said sequence of sample images of the media stream of said second media channel received from the sample image server have a lower resolution than the images of said second media channel decoded by the media receiver

3. The method according to claim 1 or 2, wherein the images in said sequence of sample images of the media stream of said second media channel received from the sample image server each have a size smaller than 1 MByte, preferably less than kByte.

4. The method according to one of claims 1 to 3, wherein the individual images in said sequence of sample images of the media stream of said second media channel are received in intervals from the sample image server.

5. The method according to one of claims 1 to 4, wherein the individual images in said sequence of sample images of the media stream of said second media channel are received by streaming the sequence of sample images of the media stream of said second media channel from the sample image server using a streaming protocol.

6. The method according to one of claims 1 to 5, wherein the individual images in said sequence of sample images of the media stream of said second media channel are received using UDP as a transport protocol, or via HTML5-based transport.

7. The method according to one of claims 1 to 6, wherein the individual images in said sequence of sample images of the media stream of said second media channel that received from the sample image server correspond to images in said encoded media stream conveyed by the second media channel which is substantially concurrently broadcast using said television broadcast signals.

8. The method according to one of claims 1 to 7, further comprising receiving from the sample image server via the packet-based network, sequences of images of media streams of different media channels of said plurality of media channels the television broadcast signal, wherein the different media channels include one or more of: one or more media channels adjacent to the first media channel in the media channel list, media channels of a favourite media channel list, and a media channel tuned to prior to the first media channel.

9. The method according to one of claims 1 to 8, further comprising receiving broadcast television signals providing said plurality of media channels.

10. The method according to one of claims 1 to 9, wherein the media streams of the first and second channels are received from a streaming media server.

11. The method according to one of claims 1 to 10, wherein the media streams convey television programs.

12. One or more computer readable media storing instructions that, when executed by a processor of a media receiver, cause the media receiver to perform the method according to one of claims 1 to 11.

13. A media receiver, comprising:
a tuner configured to tune to one of a plurality of media channels to receive a media stream conveyed by said one media channel, wherein the tuner is configured to start providing, in response to switching from a first media channel of the plurality of media channels to a second media channel of the plurality of media channels, a media stream conveyed by the second media channel to a media stream decoder;
a network interface configured to connect to a packet-based network for receiving, from an sample image server, a sequence of sample images of the media stream of the second media channel;
said media stream decoder, wherein the media stream decoder adapted to start decoding the encoded media stream of said second media channel upon starting to receive the media stream of the second media channel from the tuner; and
a controller configured to output, during a time interval between a point in time of switching from the first media channel to the second media channel and a point in time of the first decoded image of the media stream of said second media channel becoming available at the media stream decoder, said sequence of sample images received from the sample image server for display on a screen; and to output, upon the first decoded image of the media stream of said second media channel becoming available at the media stream decoder, decoded images of the media stream of said second media channel for display on the screen.

14. The media receiver according to claim 13, wherein the images in said sequence of sample images of the media stream of said second media channel received from the sample image server have a lower resolution than the images of said second media channel decoded by the media stream decoder.

15. The media receiver according to claim 13 or 14, further comprising a sample image buffer for storing the sequence of sample images, wherein the network interface is configured to add new images of said sequence of images to the sample image buffer upon their reception from the sample image server.
